# EUROPEAN PATENT APPLICATION

(11) **EP 3 643 435 A1**
(43) Date of publication of application: **29.04.2020**
(21) Application number: 17919086.3
(22) Date of filing: 26.07.2017
(51) Int. Cl.: B22F 3/16, B22F 3/105, B33Y 10/00, B33Y 40/00, B33Y 80/00

(54) **METHOD FOR MANUFACTURING METAL MEMBER**

(71) Applicant: Yamaha Hatsudoki Kabushiki Kaisha, Iwata-shi, Shizuoka 438-8501 (JP)
(72) Inventor: FUJITA, Hideo, Iwata-shi Shizuoka 438-8501 (JP)
(74) Representative: Zimmermann, Tankred Klaus
(86) International application number: PCT/JP2017/027047
(87) International publication number: WO 2019/021389

(57) **Abstract**

A manufacturing method of a metal member 13 includes a manufacturing step of manufacturing a three-dimensional manufactured metal object through additive manufacturing by layering and bonding a plurality of layers in a layering direction DL. The three-dimensional manufactured object includes the metal member 13 including an overhang portion 14, and a plurality of supports 12 supporting the overhang portion 14 and integral with the metal member 13. The support 12 includes a blade 22 which is not in contact with the metal member 13 and a column 21 which is in contact with the metal member 13 and extends in the layering direction DL from the blade 22 toward the overhang portion 14.

## Description

### Technical Field

The present invention relates to a manufacturing method of a metal member to manufacture the metal member through additive manufacturing which is also called 3D printing.

### Background Art

In 3D printing, a three-dimensional manufactured object is made by layering and bonding a plurality of layers in a layering direction. In many methods of 3D printing, when the product to be finally obtained includes an overhang portion, that is, a portion located in the air, a support, which is also called a support member, to support the overhang portion is made together with the product. After the three-dimensional manufactured object including the product portion and the support portion is made, the support is removed from the three-dimensional manufactured object. For example, Patent Literature 1 discloses an apparatus to remove a support member from an object using a water jet.

### Citation List

### Patent Literature

Patent Literature 1: JP 2011-5666 A

### SUMMARY OF INVENTION

### Technical Problem

In a case in which a three-dimensional manufactured object is made of resin, there is a known method to make a support from resin material different from that of the overhang portion and remove the support by dissolving the support in liquid after the three-dimensional manufactured object is made. In a case in which a three-dimensional manufactured object is made of metal, such a method cannot be adopted and the support needs to be removed physically. However, when the three-dimensional manufactured object includes many supports, all of the supports cannot be removed in a short time. In particular, when the three-dimensional manufactured object is made of metal, the support is higher in strength compared with the case in which the three-dimensional manufactured object is made of resin and thus the support cannot be removed easily. Furthermore, when the support is in a hollow portion, the support is hidden by the hollow portion and thus it is more difficult to remove the support.

Therefore, an object of the present invention is to provide a manufacturing method of a metal member that is able to reduce the burden required to remove a support. Solution to Problem

A preferred embodiment of the present invention provides a manufacturing method of a metal member including a manufacturing step of manufacturing a three-dimensional manufactured metal object through additive manufacturing by layering and bonding a plurality of layers in a layering direction, wherein the three-dimensional manufactured object includes the metal member including an overhang portion, and a plurality of supports that support the overhang portion and are integral with the metal member, and the support includes a blade that is not in contact with the metal member, and a column that extends from the blade toward the overhang portion in the layering direction and is in contact with the metal member. The manufacturing method of the metal member may further include a breaking step of breaking the support by twisting the support around the column by changing a magnitude and a direction of a liquid pressure applied to the blade while applying the liquid pressure to the blade of the support.

According to this arrangement, the three-dimensional manufactured metal object is made by layering and bonding the plurality of layers in the layering direction. The three-dimensional manufactured object includes the metal member including the overhang portion and the plurality of supports that support the overhang portion. The support is a portion that is made of the same metal material as that of the metal member and integral with the metal member. The support includes the blade that is not in contact with the metal member and the column that extends in the layering direction from the blade toward the overhang portion. The column is in contact with the metal member.

When the magnitude and direction of the liquid pressure applied to the blade are changed while applying the liquid pressure to the blade of the support, the blade is moved around the column, and the column of the support is twisted. At this time, if the stress generated in the column exceeds the strength of the column, the column breaks and the support is separated from the metal member. Even if the stress generated in the column is equal to or less than the strength of the column, the repeated loads are applied to the support and thus the fatigue fracture occurs during the support swings around the column and the column breaks. Thus, it is possible to separate each of the supports from the metal member merely by changing the magnitude and direction of the liquid pressure applied to the blade. Accordingly, the burden required to remove the support can be reduced.

In the present preferred embodiment, at least one of the following features may be added to the above manufacturing method of the metal member.

A cross-sectional area of the column is smaller than a cross-sectional area of the blade. A cross-section means a cross-section perpendicular to the layering direction and a cross-sectional area means an area of a cross-section perpendicular to the layering direction.

According to this arrangement, the cross-sectional area of the column is smaller than the cross-sectional area of the blade. Thus, the strength of the column is lower than the strength of the blade. When the liquid pressure is applied to the blade and the column is twisted, the column, which is the most fragile in the support, breaks first, and the support is separated from the metal member. Thus, it is possible to break the column more reliably in a short time.

The blade of the support has a plate-shaped configuration that has a width longer than a length of the column in the layering direction.

According to this arrangement, the width of the blade of the support is wide. More specifically, the width of the blade is longer than the height of the column, that is, the length of the column in the layering direction. In this way, the width of the blade is wide and thus the load applied to the blade from the liquid increases, and the stress generated in the column increases. Thus, it is possible to break the column more reliably in a short time.

The metal member includes a hollow portion provided with a hole that is open at an outer surface of the metal member and a cavity that extends from the hole to an interior of the metal member, and the support is disposed in the hollow portion.

According to this arrangement, the support is disposed in the hollow portion of the metal member and thus it is difficult to bring a tool to separate the support into contact with the support. However, it is possible to separate each of the supports merely by changing the magnitude and direction of the liquid pressure applied to the blade even without using such a tool. The separated support can be discharged from the cavity through the hole of the hollow portion that is open at the outer surface of the metal member. Thus, it is possible to remove the support from the metal member.

The blade of the support includes a plate-shaped inclined portion that is inclined with respect to a centerline of the cavity of the hollow portion when viewed in the layering direction.

According to this arrangement, the blade of the support does not extend in an axial direction of the cavity, that is, a direction of the centerline of the cavity, but is inclined with respect to the centerline of the cavity of the hollow portion when viewed in the layering direction. The flow of liquid in the cavity is blocked by the blade of the support. Thus, the load applied to the blade from the liquid increases, and the stress generated in the column increases. Accordingly, it is possible to break the column more reliably in a short time.

The support further includes a notch that is open at an outer surface of the support, and a dimension in the layering direction from a tip portion of the support in the layering direction to the notch is smaller than a maximum value of a diameter of the hole.

According to this arrangement, the notch, which is open at the outer surface of the support, is provided with the support. When the support, which has been separated from the metal member, collides with the metal member, the stress concentration occurs at the notch. When this stress exceeds the strength of the support, the support breaks at the notch. The dimension in the layering direction from the tip portion of the support to the notch is smaller than the maximum value of the diameter of the hole. Thus, the support, which has been separated from the metal member, can be cut into fragments each of which is shorter than the diameter of the hole. Thus, it is possible to effectively discharge the separated support through the hole of the hollow portion.

The support further includes a notch that is open at an outer surface of the support.

According to this arrangement, the notch, which is open at the outer surface of the support, is provided with the support. When the support, which has been separated from the metal member, collides with the metal member, the stress concentration occurs at the notch. When this stress exceeds the strength of the support, the support breaks at the notch. Thus, the support, which has been separated from the metal member, can be cut into shorter fragments.

### Advantageous Effects of Invention

According to the present invention, it is possible to provide a manufacturing method of a metal member that is able to reduce the burden required to remove a support.

### BRIEF DESCRIPTION OF THE DRAWINGS

[Fig. 1] a block diagram showing a schematic manufacturing system for a metal member according to a preferred embodiment of the present invention.
[Fig. 2] a schematic view showing a three-dimensional manufactured metal object manufactured by the manufacturing system shown in Fig. 1. Fig. 2 (a) is an external view of the three-dimensional manufactured object when viewed in the direction of the arrow IIA shown in Fig. 2 (b). Fig. 2 (b) is a cross-sectional view of the three-dimensional manufactured object taken along the IIB-IIB line shown in Fig. 2 (a). Fig. 2 (c) is an external view of the three-dimensional manufactured object when viewed in the direction of the arrow IIC shown in Fig. 2 (b).
[Fig. 3] a schematic view showing a support (a first support) provided in the three-dimensional manufactured object shown in Fig. 2. Fig. 3 (a) is a side view of the support when viewed in the direction of the arrow IIIA shown in Fig. 3 (c). Fig. 3 (b) is a front view of the support when viewed in the direction of the arrow IIIB shown in Fig. 3 (c). Fig. 3 (c) is a plan view of the support when viewed in the direction of the arrow IIIC shown in Fig. 3 (b).
[Fig. 4A] a cross-sectional view showing an example of the cross-section of the support taken along the IV-IV line shown in Fig. 3 (b).
[Fig. 4B] a cross-sectional view showing another example of the cross-section of the support taken along the IV-IV line shown in Fig. 3 (b).
[Fig. 5] a schematic view showing an example of a support remove device.
[Fig. 6A] a cross-sectional view showing a state in which a liquid-supply to supply liquid to the cavity of the metal member and a liquid-suction to suck the liquid from the cavity of the metal member are alternatively repeated.
[Fig. 6B] a schematic view showing a state in which the supports swing around the columns due to the changes in the liquid pressure applied to the supports.
[Fig. 6C] a cross-sectional view showing a state in which the first supports and the second supports have been separated from the metal member.
[Fig. 6D] a cross-sectional view showing a state in which the first supports and the second supports have broken at the notches.
[Fig. 6E] a cross-sectional view showing a state in which the separated supports have been discharged from the metal member.
[Fig. 7] a front view of the support according to another preferred embodiment of the present invention.

### DETAILED DESCRIPTION OF THE PREFERRED EMBODIMENTS

Hereinafter, preferred embodiments of the present invention will be described in detail referring to the attached drawings.

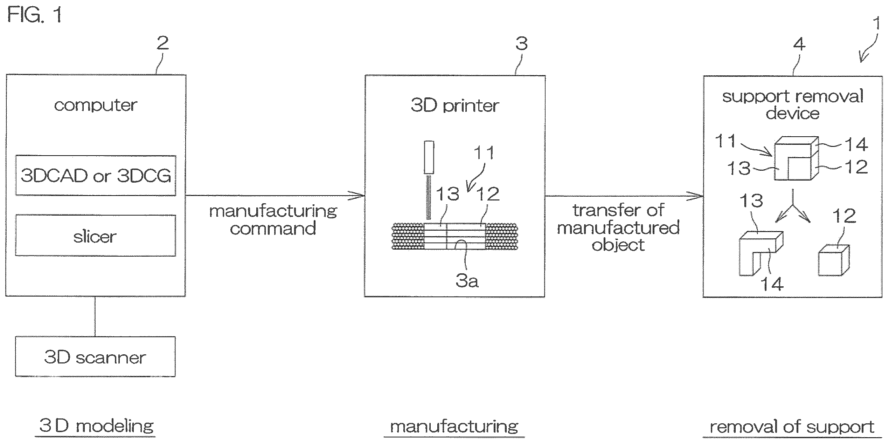

Fig. 1 is a block diagram showing a schematic manufacturing system 1 of a metal member 13 according to a preferred embodiment of the present invention. To facilitate understanding, Fig. 1 shows the metal member 13 and a support 12 that have shapes different from their actual shapes.

The manufacturing system 1 of the metal member 13 includes a personal computer 2 to create 3D data (a so-called 3D model) for a three-dimensional manufactured object 11, a 3D printer 3 that manufactures the three-dimensional manufactured metal object 11 based on the 3D data of the three-dimensional manufactured object 11 created by the computer 2, and a support removal device 4 that removes the support 12 from the three-dimensional manufactured metal object 11 manufactured by the 3D printer 3.

When the metal member 13 is manufactured, 3D modeling to create 3D data of the three-dimensional manufactured object 11 using the computer 2 is performed. After that, 3D printing to cause the 3D printer 3 to manufacture the three-dimensional manufactured metal object 11 based on the 3D data of the three-dimensional manufactured object 11 is performed. After that, the three-dimensional manufactured object 11 is manually or automatically carried to the support removal device 4 and the support removal device 4 removes the support 12. Thus, the metal member 13 is manufactured.

Software (a so-called slicer) is installed on the computer 2. The software performs slicing to divide 3D data of the three-dimensional manufactured object 11 into a plurality of layers parallel to a layering direction DL (vertical direction), and creating instruction data (so-called G codes) that define a modeling order for each layer created by the slicing. The functions of the slicer may be included in the 3D CAD software or 3D CG software installed on the computer 2.

The 3D printer 3 layers and bonds in the layering direction DL all of the layers included in the three-dimensional manufactured object 11, in order, from a side of the manufacturing stage 3a in accordance with the G codes. The 3D printer 3 manufactures each layer included in the three-dimensional manufactured object 11 by selective laser sintering to sinter only the specific portion of the metal powder layer by laser irradiation. The selective laser sintering is a type of additive manufacturing. As long as the 3D printer 3 uses the additive manufacturing, the 3D printer 3 may manufacture the three-dimensional manufactured metal object 11 using a method other than the selective laser sintering.

The three-dimensional manufactured object 11 is made of metal material such as iron. The three-dimensional manufactured object 11 includes the metal member 13 including an overhang portion 14, and the support 12 supporting the overhang portion 14. The 3D data of the metal member 13 may be created by the 3D CAD software or 3D CG software installed on the computer 2, or may be created by a 3D scanner. The 3D data of the support 12 is automatically added to the 3D data of the metal member 13. The addition may be performed by slicing software, or may be performed by the 3D CAD software or 3D CG software.

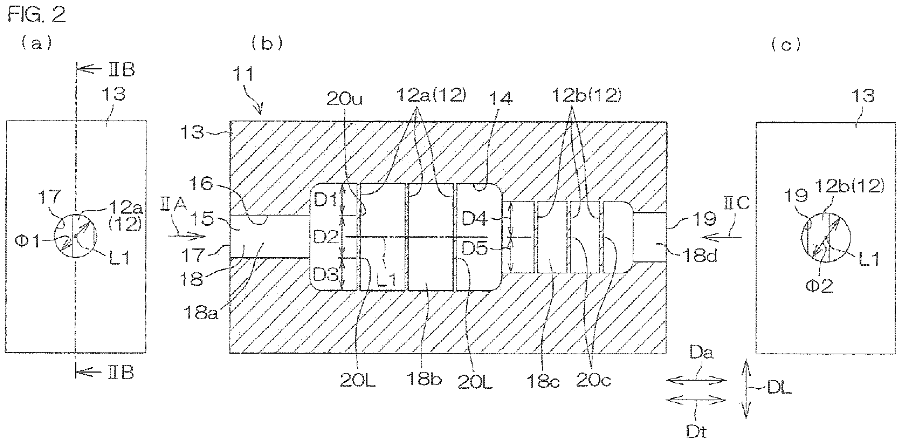

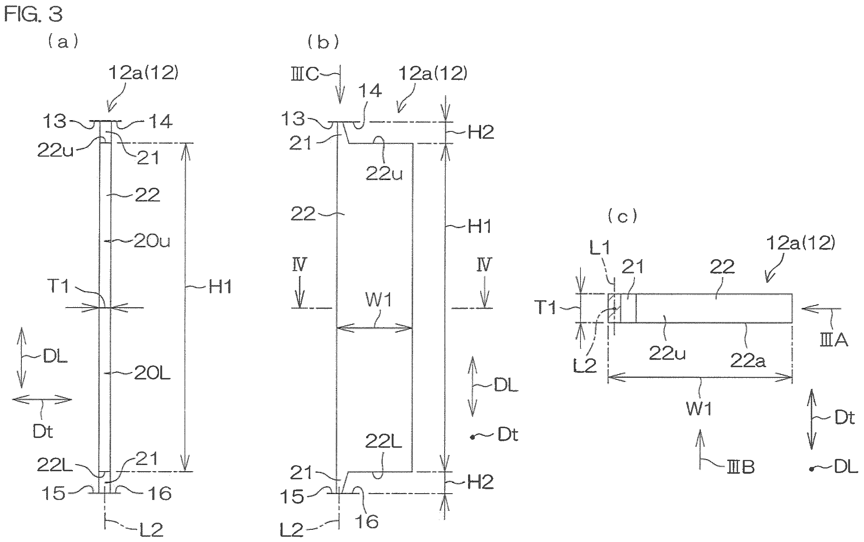

Fig. 2 is a schematic view showing the three-dimensional manufactured metal object 11 manufactured by the manufacturing system 1 shown in Fig. 1. Fig. 3 is a schematic view showing the support 12 (the first support 12a) provided in the three-dimensional manufactured object 11 shown in Fig. 2.

Fig. 2 (a) is an external view of the three-dimensional manufactured object 11 when viewed in the direction of the arrow IIA shown in Fig. 2 (b). Fig. 2 (b) is a cross-sectional view of the three-dimensional manufactured object 11 taken along the IIB-IIB line shown in Fig. 2 (a). Fig. 2 (c) is an external view of the three-dimensional manufactured object 11 when viewed in the direction of the arrow IIC shown in Fig. 2 (b). Fig. 3 (a) is a side view of the support 12 when viewed in the direction of the arrow IIIA shown in Fig. 3 (c). Fig. 3 (b) is a front view of the support 12 when viewed in the direction of the arrow IIIB shown in Fig. 3 (c). Fig. 3 (c) is a plan view of the support 12 when viewed in the direction of the arrow IIIC shown in Fig. 3 (b).

As shown in Fig. 2 (b), the metal member 13 includes a hollow portion 15 defining a cavity 18. The cavity 18 may connect two holes that are open at the outer surface of the metal member 13, or may extend to the interior of the metal member 13 from a hole that is open at the outer surface of the metal member 13 and be closed at the interior of the metal member 13. Fig. 2 (b) shows an example of the former. In a case in which the metal member 13 is a cylinder head included in engine components, for example, the hollow portion 15 corresponds to a water jacket that guides cooling water to cool an engine.

The hollow portion 15 includes a first hole 17 that is open at the outer surface of the metal member 13, a second hole 19 that is open at the outer surface of the metal member 13, and the cavity 18 that extends from the first hole 17 to the second hole 19. The first hole 17 may have a round shape or an elliptical shape, or may have a shape other than these shapes. This applies to the second hole 19. The area of the first hole 17 is smaller than the area of the second hole 19. The area of the first hole 17 may be equal to the area of the second hole 19, or may be larger than the area of the second hole 19.

The cavity 18 of the hollow portion 15 is defined by a tubular inner circumferential surface 16 surrounding the centerline L1 of the cavity 18. The inner circumferential surface 16 of the hollow portion 15 is continuous over its whole circumference in a circumferential direction of the hollow portion 15 (a direction around the centerline L1). The cavity 18 includes a first passage 18a that extends from the first hole 17 toward the second hole 19, a second passage 18b that extends from the first passage 18a toward the second hole 19, a third passage 18c that extends from the second passage 18b toward the second hole 19, and a fourth passage 18d that extends from the third passage 18c to the second hole 19. The diameter of the second passage 18b is larger than the diameter of the third passage 18c.

The plurality of supports 12 are disposed inside the hollow portion 15, that is, disposed in the cavity 18. In Fig. 2 (b), the number of the supports 12 is reduced to facilitate understanding, but actually more supports 12 are disposed inside the hollow portion 15. Although Fig. 2 (b) shows that the supports 12 are disposed only in the second passage 18b and the third passage 18c, the supports 12 also may be disposed in at least one of the first passage 18a and the fourth passage 18d.

Each support 12 is integral with the metal member 13 and made of the same metal material as that of the metal member 13. Each support 12 is in contact with the metal member 13 only at two tip portions, that is, the upper end portion and the lower end portion of the support 12 in the layering direction DL. Each support 12 extends in the layering direction DL from the lower portion of the inner circumferential surface 16 of the hollow portion 15 to the upper portion of the inner circumferential surface 16 of the hollow portion 15. The overhang portion 14 is provided in a ceiling portion of the hollow portion 15, that is, the upper portion of the inner circumferential surface 16 of the hollow portion 15. Thus, the overhang portion 14 is supported by the plurality of supports 12.

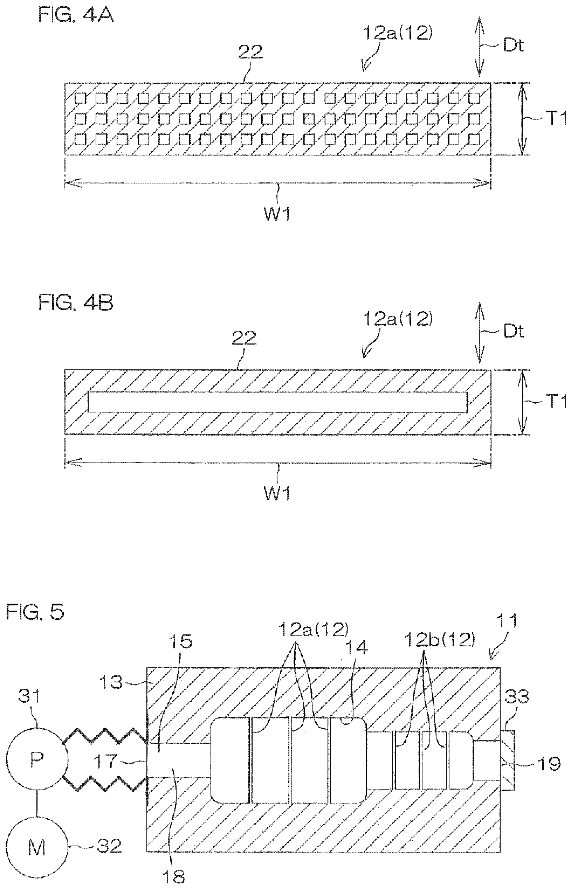

The support 12 may be solid or may be hollow. More specifically, the entire support 12 may be solid or hollow, or a solid portion and a hollow portion may be provided with the support 12. In a case in which the entire support 12 is hollow or a hollow portion is provided with the support 12, the support 12 may include a mesh-shaped cross-section, or may include an annular cross-section that surrounds the internal space. Fig. 4A shows an example of the former and Fig. 4B shows an example of the latter.

As shown in Fig. 3 (b), the support 12 includes a plate-shaped blade 22 that extends in the layering direction DL, and two columns 21 that extend in the layering direction DL from the blade 22 to the metal member 13. The first column 21 extends upward from the upper edge 22u of the blade 22 and the second column 21 extends downward from the lower edge 22L of the blade 22. The upper column 21 is combined with the upper portion of the inner circumferential surface 16 of the hollow portion 15 that corresponds to the overhang portion 14. The lower column 21 is combined with the lower portion of the inner circumferential surface 16 of the hollow portion 15. The blade 22 is not in contact with the metal member 13 and is connected to the metal member 13 via the two columns 21.

The two columns 21 correspond to the upper end portion and the lower end portion of the support 12, respectively. The two columns 21 are disposed on a vertical straight line L2 extending in the layering direction DL. The upper column 21 extends upward from the end of the upper edge 22u of the blade 22. The lower column 21 extends downward from the end of the lower edge 22L of the blade 22. The upper column 21 may extend upward from the central portion of the upper edge 22u of the blade 22. Similarly, the lower column 21 may extend downward from the central portion of the lower edge 22L of the blade 22.

The blade 22 may be a flat plate including a rectangular cross-section, or a curved plate including an arc-shaped cross-section. Fig. 3 (c) shows an example of the former. As shown in Fig. 3 (b) and Fig. 3 (c), the height H1 of the blade (the dimension of the blade 22 in the layering direction DL) is larger than the width W1 of the blade 22 and larger than the thickness T1 of the blade 22. The width W1 of the blade 22 is larger than the thickness T1 of the blade 22. As shown in Fig. 3 (c), the blade 22 includes an inclined portion 22a that is inclined with respect to the centerline L1 of the cavity 18 when viewed in the layering direction DL. The inclined portion 22a may be perpendicular to the centerline L1 of the cavity 18, or may be obliquely inclined with respect to the centerline L1 of the cavity 18. Fig. 3 (c) shows an example in which the entire blade 22 is perpendicular to the centerline L1 of the cavity 18.

As shown in Fig. 3 (b), the height H1 of the blade 22 is longer than the height H2 of the column 21, that is, a distance in the layering direction DL from the tip of the blade 22 in the layering direction DL (the upper edge 22u or the lower edge of the blade 22) to the metal member 13. Similarly, the width W1 of the blade 22 is longer than the height H2 of the column 21. The width W1 of the blade 22 is smaller than the maximum value of the diameter of the first hole 17 (refer to Fig. 2 (a)) and smaller than the maximum value of the diameter of the second hole 19 (refer to Fig. 2 (c)). The column 21 is thinner than the blade 22, and the cross-sectional area of the column 21 is smaller than the cross-sectional area of the blade 22. The diameter of the column 21 may be constant from the upper end of the column 21 to the lower end of the column 21, or may decrease continuously or step by step as the metal member 13 is approached.

Fig. 4A and Fig. 4B show an example in which the blade 22 has a rectangular cross-section. The blade 22 may include a cross-section having such a shape at any position in the layering direction DL, or may include a cross-section having such a shape only at the specific position. All of the supports 12 are disposed such that the thickness direction Dt of the support 12 is parallel or substantially parallel to an axial direction Da of the cavity 18 (a direction of the centerline L1 of the cavity 18).

As shown in Fig. 2 (b), the plurality of supports 12 include a plurality of first supports 12a that are disposed in the second passage 18b and a plurality of second supports 12b that are disposed in the third passage 18c. The first supports 12a are longer in the layering direction DL than the second supports 12b. The length of the second supports 12b in the layering direction DL is larger than a maximum value Φ 1 of the diameter of the first hole 17 and larger than a maximum value Φ 2 of the diameter of the second hole 19. Thus, the length of the first supports 12a in the layering direction DL is larger than the maximum value Φ 1 of the diameter of the first hole 17 and larger than the maximum value Φ 2 of the diameter of the second hole 19.

Each support 12 includes a plurality of notches that are open at the outer surface of the support 12. As shown in Fig. 3 (a), the first support 12a includes an upper notch 20u and a lower notch 20L that are disposed at positions different from each other in the layering direction DL. As shown in Fig. 2 (b), the second support 12b includes a central notch 20c that is disposed between the upper end portion of the second support 12b and the lower end portion of the second support 12b in the layering direction DL. The central portion of the first support 12a in the layering direction DL is disposed between the upper notch 20u and the lower notch 20L in the layering direction DL.

A dimension D1 in the layering direction DL from the upper end portion of the first support 12a to the upper notch 20u is smaller than the maximum value Φ 1 of the diameter of the first hole 17 and smaller than the maximum value Φ 2 of the diameter of the second hole 19. Similarly, a dimension D3 in the layering direction DL from the lower end portion of the first support 12a to the lower notch 20L is smaller than the maximum value Φ 1 of the diameter of the first hole 17 and smaller than the maximum value Φ 2 of the diameter of the second hole 19. Furthermore, a dimension D2 in the layering direction DL from the upper notch 20u to the lower notch 20L is smaller than the maximum value Φ 1 of the diameter of the first hole 17 and smaller than the maximum value Φ 2 of the diameter of the second hole 19.

A dimension D4 in the layering direction DL from the upper end portion of the second support 12b to the central notch 20c is smaller than the maximum value Φ 1 of the diameter of the first hole 17 and smaller than the maximum value Φ 2 of the diameter of the second hole 19. Similarly, a dimension D5 in the layering direction DL from the lower end portion of the second support 12b to the central notch 20c is smaller than the maximum value Φ 1 of the diameter of the first hole 17 and smaller than the maximum value Φ 2 of the diameter of the second hole 19.

Next, the removal of the supports 12 will be described.

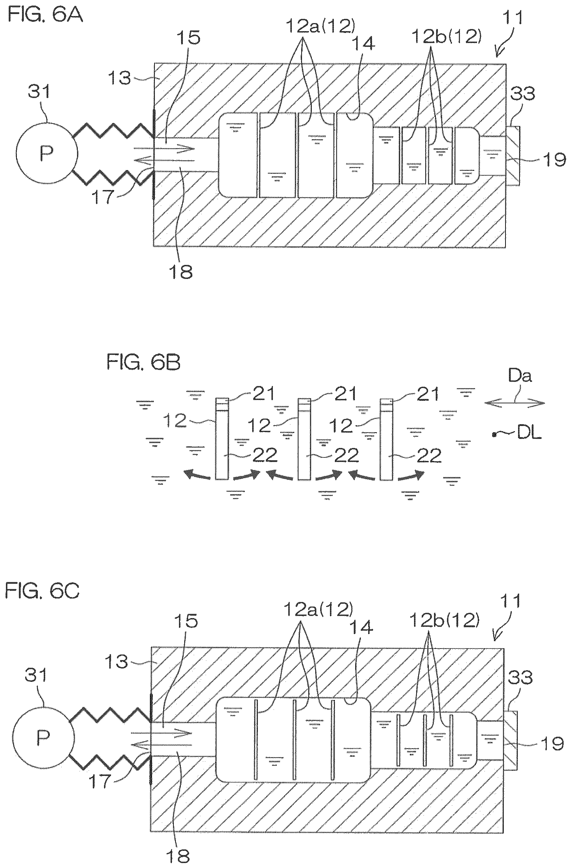

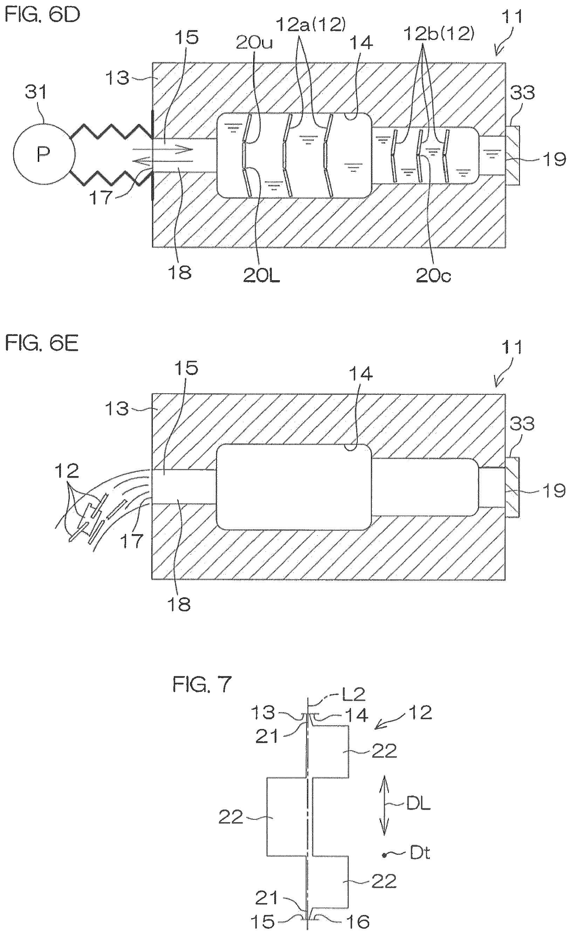

Fig. 5 is a schematic view showing an example of the support removal device 4. Fig. 6A is a cross-sectional view showing a state in which a liquid-supply to supply liquid to the cavity 18 of the metal member 13 and a liquid-suction to suck the liquid from the cavity 18 of the metal member 13 are alternatively repeated. Fig. 6B is a schematic view showing a state in which the supports 12 swing around the columns 21 due to the changes in the liquid pressure applied to the supports 12. Fig. 6C is a cross-sectional view showing a state in which the first supports 12a and the second supports 12b have been separated from the metal member 13. Fig. 6D is a cross-sectional view showing a state in which the first supports 12a and the second supports 12b have been broken at the notches. Fig. 6E is a cross-sectional view showing a state in which the separated supports 12 have been discharged from the metal member 13.

As shown in Fig. 5, the support removal device 4, which removes the supports 12 from the three-dimensional manufactured object 11, includes a liquid-supply pump 31 that changes a magnitude and a direction of a liquid pressure applied to the three-dimensional manufactured object 11 while applying the liquid pressure to the three-dimensional manufactured object 11, and a prime mover 32 that drives the liquid-supply pump 31 such as an electric motor. The liquid-supply pump 31 is a reciprocating pump that supplies liquid toward the three-dimensional manufactured object 11 and sucks the liquid from the three-dimensional manufactured object 11, for example.

When all of the supports 12 are removed from the three-dimensional manufactured metal object 11 manufactured by the 3D printer 3 (refer to Fig. 1), the cavity 18 of the metal member 13 is filled with liquid such as water. As shown in Fig. 6A, in this state, the liquid-supply pump 31 alternatively repeats a liquid-supply to supply liquid to the cavity 18 of the metal member 13 and a liquid-suction to suck the liquid from the cavity 18 of the metal member 13. When one of the first hole 17 and the second hole 19 is closed by an elastic body 33 made of rubber or resin, the liquid-supply pump 31 may supply the liquid only to the cavity 18 of the metal member 13 and suck only the liquid from the cavity 18 of the metal member 13.

When the liquid-supply pump 31 supplies the liquid in a liquid-supply direction, the liquid pressure in the liquid-supply direction is generated in the cavity 18. When the liquid-supply pump 31 sucks the liquid in a liquid-suction direction, the liquid pressure in the liquid-suction direction is generated in the cavity 18. The liquid-supply direction and the liquid-suction direction are opposite to each other. Thus, when the liquid-supply pump 31 alternatively repeats the liquid-supply and the liquid-suction, the magnitude and the direction of the liquid pressure applied to the support 12 changes. Accordingly, alternating loads substantially equal in magnitude and opposite in direction are applied to each support 12. In other words, repeated loads that regularly change in magnitude and direction are applied to each support 12.

Loads due to the change of the liquid pressure are applied to the blade 22 of each support 12. Thus, as shown in Fig. 6B, the column 21 of each support 12 is twisted and the blade 22 of each support 12 moves around the column 21. As shown in Fig. 6C, if the stress generated in the column 21 at this time exceeds the strength of the column 21, the two columns 21 of each support 12 break and the support 12 is separated from the metal member 13. Even if the stress generated in the column 21 is equal to or less than the strength of the column 21, the repeated loads are applied to each support 12 and thus the fatigue fracture occurs during each support 12 swings around the column 21 and two columns 21 of each support 12 break.

As shown in Fig. 6D, each support 12 includes a plurality of notches 20u, 20c, 20L that are open at the outer surface of the support 12. The supports 12, which have been separated from the metal member 13, move in the cavity 18 in accordance with the flow of the liquid in the cavity 18 and collide with the metal member 13. At this time, the stresses are generated at the notches 20u, 20c, 20L. When the stresses generated at the notches 20u, 20c, 20L exceed the strength of the support 12, the support 12 breaks at the notches 20u, 20c, 20L. Thus, the support 12, which has been separated from the metal member 13, can be cut into fragments each of which is shorter than the diameters of the first hole 17 and the second hole 19.

After the liquid-supply and the liquid-suction are alternatively repeated and all the supports 12 are separated from the metal member 13, as shown in Fig. 6E, the liquid in the cavity 18 is discharged. At this time, the supports 12, which have been separated from the metal member 13, are also discharged from the cavity 18. When the supports 12 remain in the cavity 18 after all the liquid in the cavity 18 is discharged, the remaining supports 12 may be discharged by supplying the cavity 18 with fluid such as air or water, or may be discharged by inclining and shaking the metal member 13. If necessary, machining such as drilling and polishing may be applied to the metal member 13 after the separated supports 12 have been discharged.

As described above, in the present preferred embodiment, the three-dimensional manufactured metal object 11 is made by layering and bonding the plurality of layers in the layering direction DL. The three-dimensional manufactured object 11 includes the metal member 13 including the overhang portion 14 and the plurality of supports 12 supporting the overhang portion 14. The support 12 is a portion that is made of the same metal material as that of the metal member 13 and integral with the metal member 13. The support 12 includes the blade 22 that is not in contact with the metal member 13 and the column 21 that extends in the layering direction DL from the blade 22 toward the overhang portion 14. The column 21 is in contact with the metal member 13.

When the magnitude and direction of the liquid pressure applied to the blade 22 are changed while applying the liquid pressure to the blade 22 of the support 12, the blade 22 is moved around the column 21, and the column 21 of the support 12 is twisted. At this time, if the stress generated in the column 21 exceeds the strength of the column 21, the column 21 breaks and the support 12 is separated from the metal member 13. Even if the stress generated in the column 21 is equal to or less than the strength of the column 21, the repeated loads are applied to the support 12 and thus the fatigue fracture occurs during the support 12 swings around the column 21 and the column 21 breaks. Thus, it is possible to separate each of the supports 12 from the metal member 13 merely by changing the magnitude and direction of the liquid pressure applied to the blade 22. Accordingly, the burden required to remove the support 12 can be reduced.

In the present preferred embodiment, the cross-sectional area of the column 21 is smaller than the cross-sectional area of the blade 22. Thus, the strength of the column 21 is lower than the strength of the blade 22. When the liquid pressure is applied to the blade 22 and the column 21 is twisted, the column 21, which is the most fragile portion of the support 12, breaks first, and the support 12 is separated from the metal member 13. Thus, it is possible to break the column 21 more reliably in a short time.

In the present preferred embodiment, the width W1 of the blade 22 of the support 12 is wide. More specifically, the width W1 of the blade 22 is longer than the height H2 of the column 21, that is, the length of the column 21 in the layering direction DL. In this way, the width W1 of the blade 22 is wide and thus the load applied to the blade 22 from the liquid increases, and the stress generated in the column 21 increases. Thus, it is possible to break the column 21 more reliably in a short time.

In the present preferred embodiment, the supports 12 are disposed in the hollow portion 15 of the metal member 13 and thus it is difficult to bring a tool to separate the support 12 into contact with the support 12. However, it is possible to separate each of the supports 12 merely by changing the magnitude and direction of the liquid pressure applied to the blade 22 even without using such a tool. The separated support 12 can be discharged from the cavity 18 through the hole of the hollow portion 15 that is open at the outer surface of the metal member 13. Thus, it is possible to remove the support 12 from the metal member 13.

In the present preferred embodiment, the blade 22 of the support 12 does not extend in the axial direction Da of the cavity 18, that is, the direction of the centerline L1 of the cavity 18, but is inclined with respect to the centerline L1 of the cavity 18 of the hollow portion 15 when viewed in the layering direction DL. The flow of liquid in the cavity 18 is blocked by the blade 22 of the support 12. Thus, the load applied to the blade 22 from the liquid increases, and the stress generated in the column 21 increases. Accordingly, it is possible to break the column 21 more reliably in a short time.

In the present preferred embodiment, the notches 20u, 20c, 20L, which are open at the outer surface of the support 12, are provided with the support 12. When the support 12, which has been separated from the metal member 13, collides with the metal member 13, the stress concentration occurs at the notches 20u, 20c, 20L. When this stress exceeds the strength of the support 12, the support 12 breaks at the notches 20u, 20c, 20L. The dimensions D1, D2, D4 and D5 in the layering direction DL from the tip portion (the upper end portion or the lower end portion) of the support 12 to the notches 20u, 20c, 20L are smaller than the maximum value Φ1 of the diameter of the first hole 17 and smaller than the maximum value Φ2 of the diameter of the second hole 19. Thus, the support 12, which has been separated from the metal member 13, can be cut into fragments each of which is shorter than the diameters of the first hole 17 and the second hole 19. Thus, it is possible to effectively discharge the separated support 12 through the hole of the hollow portion 15.

### Other Preferred Embodiments

The present invention is not restricted to the contents of the preferred embodiments described above and various modifications are possible.

For example, the metal member 13 may be an engine component other than the cylinder head, or may be a component other than an engine component.

The support 12 may be disposed outside the hollow portion 15. For example, the support 12 may extend from the manufacturing stage 3a (refer to Fig. 1) to the overhang portion 14. That is, the lower end portion of the support 12 may be in contact with the manufacturing stage 3a instead of the metal member 13.

The notches 20u, 20c, 20L may be omitted from the support 12.

The cross-sectional area of the column 21 may be equal to the cross-sectional area of the blade 22, or may be larger than the cross-sectional area of the blade 22.

A plurality of blades 22 may be provided with the single support 12. In this case, as shown in Fig. 7, the plurality of blades 22 may have different angles around the vertical straight line L2 passing through the column 21.

Two or more arrangements among all the arrangements described above may be combined.

Various other design changes are possible within the scope of the matters described in the claims.

### REFERENCE SIGNS LIST

- 1:: manufacturing system
- 2:: computer
- 3: 3D: printer
- 3a:: manufacturing stage
- 4:: support remove device
- 11:: three-dimensional manufactured object
- 12:: support
- 12a:: first support
- 12b:: second support
- 13:: metal member
- 14:: overhang portion
- 15:: hollow portion
- 16:: inner circumferential surface of hollow portion
- 17:: first hole
- 18:: cavity
- 18a:: first passage
- 18b:: second passage
- 18c:: third passage
- 18d:: fourth passage
- 19:: second hole
- 20u:: upper notch
- 20c:: central notch
- 20L:: lower notch
- 21:: column of support
- 22:: blade of support
- 22a:: inclined portion of blade
- 22u:: upper edge of blade
- 22L:: lower edge of blade
- 31:: liquid-supply pump
- 32:: prime mover
- 33:: elastic body
- H1:: height of blade
- H2:: height of column
- W1:: width of blade
- T1:: thickness of blade
- D1-D5:: dimension
- Da:: axial direction of cavity
- DL:: layering direction
- Dt:: thickness direction
- L1:: centerline of cavity
- Φ1:: maximum value of diameter of first hole
- Φ2:: maximum value of diameter of second hole

## Claims

1. A manufacturing method of a metal member, comprising a manufacturing step of manufacturing a three-dimensional manufactured metal object through additive manufacturing by layering and bonding a plurality of layers in a layering direction, wherein
the three-dimensional manufactured object includes
the metal member including an overhang portion, and
a plurality of supports that support the overhang portion and are integral with the metal member, and
the support includes
a blade that is not in contact with the metal member, and
a column that extends from the blade toward the overhang portion in the layering direction and is in contact with the metal member.

2. The manufacturing method of the metal member according to claim 1, further comprising a breaking step of breaking the support by twisting the support around the column through changing a magnitude and a direction of a liquid pressure applied to the blade while applying the liquid pressure to the blade of the support.

3. The manufacturing method of the metal member according to claim 1 or 2, wherein a cross-sectional area of the column is smaller than a cross-sectional area of the blade.

4. The manufacturing method of the metal member according to any one of claims 1 to 3, wherein the blade of the support has a plate-shaped configuration that has a width longer than a length of the column in the layering direction.

5. The manufacturing method of the metal member according to any one of claims 1 to 4, wherein
the metal member includes a hollow portion provided with a hole that is open at an outer surface of the metal member and a cavity that extends from the hole to an interior of the metal member, and
the support is disposed in the hollow portion.

6. The manufacturing method of the metal member according to claim 5, wherein the blade of the support includes a plate-shaped inclined portion that is inclined with respect to a centerline of the cavity of the hollow portion when viewed in the layering direction.

7. The manufacturing method of the metal member according to claim 5 or 6, wherein
the support further includes a notch that is open at an outer surface of the support, and
a dimension in the layering direction from a tip portion of the support in the layering direction to the notch is smaller than a maximum value of a diameter of the hole.

8. The manufacturing method of the metal member according to any one of claims 1 to 6, wherein the support further includes a notch that is open at an outer surface of the support.
